# EUROPÄISCHE PATENTANMELDUNG

(11) **EP 1 840 482 A2**
(43) Veröffentlichungstag der Anmeldung: **03.10.2007**
(21) Anmeldenummer: 07450056.2
(22) Anmeldetag: 22.03.2007
(51) Int. Cl.: F24H 1/18, F24H 9/12

(54) **Wärmespeicher**

(30) Priorität: 28.03.2006 AT 5212006
(71) Anmelder: Teufel, Arnold, 6372 Oberndorf (AT)
(72) Erfinder: Teufel, Arnold, 6372 Oberndorf (AT)
(74) Vertreter: Hübscher, Helmut

(57) **Zusammenfassung**

Es wird ein Wärmespeicher mit einem über Anschlußleitungen (2, 3; 4, 5) einerseits an einen Ladekreis und anderseits an einen Verbraucherkreis angeschlossenen Behälter (1) für einen Wärmeträger beschrieben, wobei der Behälter (1) an der Außenseite seines Mantels (7) und seiner Decke (8) eine Wärmeisolierung (9) trägt, die einen porösen Dämmstoffkern (10) in einer gasdicht verschweißten, evakuierten Hülle (11) aus einer Kunststoffolie aufweist. Um vorteilhafte Konstruktionsbedingungen hinsichtlich der Wärmeisolierung zu schaffen, wird vorgeschlagen, daß zwischen der Hülle (11) der Wärmeisolierung (9) und dem Mantel (7) des Behälters (1) eine Weichschaumschicht (12) vorgesehen ist und daß die Anschlußleitungen (2, 3; 4, 5) für den Ladekreis und den Verbraucherkreis durch den Boden (6) des Behälters (1) geführt sind.

## Beschreibung

Die Erfindung bezieht sich auf einen Wärmespeicher mit einem über Anschlußleitungen einerseits an einen Ladekreis und anderseits an einen Verbraucherkreis angeschlossenen Behälter für einen Wärmeträger, wobei der Behälter an der Außenseite seines Mantels und seiner Decke eine Wärmeisolierung trägt, die einen porösen Dämmstoffkern in einer gasdicht verschweißten, evakuierten Hülle aus einer Kunststoffolie aufweist.

Die Temperaturschichtung eines Wärmeträgers, üblicherweise Wasser, kann in Wärmespeichern vorteilhaft zur Bereitstellung eines heißen Wärmeträgers selbst bei einer Teilentladung ausgenützt werden. Die Wärmeisolierung der den Wärmeträger aufnehmenden, metallischen Behälter dieser Wärmetauscher spielt dabei nicht nur im Zusammenhang mit den auftretenden Wärmeverlusten, sondern auch bezüglich der Ausbildung einer Konvektionsströmung des Kältemittels innerhalb des Behälters eine entscheidende Rolle. Übliche Wärmeisolierungen aus Schaumstoff können allerdings höheren Anforderungen an eine Minimierung der Wärmeverluste von Wärmespeichern nicht genügen, selbst wenn diese Wärmeisolierungen unverhältnismäßig dick ausgebildet werden. Zur Verbesserung der Wärmedämmung wurde bereits eine Wärmeisolierung vorgeschlagen (WO 03/069237 A1), die einen porösen Dämmstoffkern in einer gasdicht verschweißten, evakuierten Hülle aus einer Kunststoffolie aufweist, wobei diese Wärmeisolierung in einen Zwischenraum zwischen dem Behältermantel und einer Außenhülle eingesetzt wird, bevor der Zwischenraum zwischen der Wärmeisolierung und der Außenhülle mit Kunststoff ausgeschäumt wird. Um höhere Wärmebelastungen der Hülle des Dämmstoffkernes zu vermeiden und seine Isoliereigenschaften nicht zu gefährden, wenn beispielsweise eine Pulverlackbeschichtung der Außenhülle eingebrannt werden soll, wird die Wärmeisolierung auf ihrer der Außenhülle zugekehrten Außenseite mit einer Wellpappe umschlossen, die eine thermische Überlastung der Hülle des Dämmstoffkernes vehindern soll, solange der Zwischenraum zwischen der Wärmeisolierung und der Außenhülle noch nicht ausgeschäumt ist. Mit dem Ausschäumen dieses Zwischenraumes wird nicht nur die Wärmeisolierung zufolge des Schäumdruckes an den Behältermantel angedrückt und an diesem festgehalten, sondern zusätzlich die Wellpappe flachgedrückt, so daß sie praktisch keinen Einfluß mehr auf die Wärmedämmeigenschaften des Isoliermantels nehmen kann. Nachteilig ist allerdings, daß mit einer Wärmebelastung der Hülle des Dämmstoffkernes über den Behältermantel gerechnet werden muß und daß die Herstellung des Isoliermantels durch das Einbringen der Wärmeisolierung in den Zwischenraum zwischen dem Behältermantel und der Außenhülle und das nachträgliche Ausschäumen des Zwischenraumes zwischen der Wärmeisolierung und der Außenhülle sehr aufwendig ist.

Ähnlich Nachteile ergeben sich bei einer anderen bekannten Konstruktion (WO 01/51860 A2), bei der ein kreiszylindrischer Behälter eines Wärmespeichers mit ebenen Platten einer Wärmeisolierung umschlossen wird, die ebenfalls einen porösen Dämmstoffkern in einer gasdicht verschweißten, evakuierten Hülle aus einer Kunststoffolie aufweist. Da diese Wärmeisolierungsplatten tangential am Behältermantel anliegen und zwischen diagonal bezüglich einer im Querschnitt quadratischen Außenhülle verlaufenden Zentrierungsblöcken angeordnet sind, müssen nicht nur die Zwischenräume zwischen den Wärmeisolierungsplatten und der Außenhülle, sondern auch die Zwickelbereiche zwischen dem Behältermantel, den Wärmeisolierungsplatten und den Zentrierblöcken zur Halterung der Wärmeisolierungsplatten ausgeschäumt werden.

Der Erfindung liegt somit die Aufgabe zugrunde, einen Wärmespeicher der eingangs geschilderten Art so auszugestalten, daß mit vergleichsweise einfachen konstruktiven Mitteln eine gute Wärmedämmung auf der Basis von evakuierten Wärmeisolierungen sichergestellt werden kann, und zwar mit einem geringen Herstellungsaufwand.

Die Erfindung löst die gestellte Aufgabe dadurch, daß zwischen der Hülle der Wärmeisolierung und dem Mantel des Behälters eine Weichschaumschicht vorgesehen ist und daß die Anschlußleitungen für den Ladekreis und den Verbraucherkreis durch den Boden des Behälters geführt sind.

Wärmeisolierungen aus einem porösen Dämmstoffkern in einer gasdicht verschweißten, evakuierten Hülle aus einer Kunststoffolie, wie sie insbesondere für die Verpackung von Tiefkühlgut eingesetzt werden, haben zwar im Vergleich zu Wärmeisolierungen aus Schaumstoff aufgrund der Evakuierung ein bedeutend höheres lsoliervermögen, doch beschränkt die begrenzte Wärmebelastbarkeit der den Dämmstoffkern umschließenden Hülle aus einer Kunststoffolie das Einsatzgebiet auf Anwendungen mit einer nur mäßigen Wärmebelastung. Durch das Vorsehen einer Weichschaumschicht zwischen der Hülle dieser Wärmeisolierung und dem Mantel des Wärmespeicherbehälters gelingt es jedoch, diese bekannten Wärmeisolierungen vorteilhaft auch für Wärmespeicher einsetzen zu können, ohne eine thermische Überlastung der den Dämmstoffkern einschließenden Hülle befürchten zu müssen. Außerdem schützt die Weichschaumschicht diese gegenüber mechanischen Beschädigungen empfindlichen Hülle vor einer solchen mechanischen Beschädigung. Dazu kommt noch, daß die Weichschaumschicht Oberflächenunregelmäßigkeiten des Behältermantels ausgleicht, so daß sich aufwendige Ausschäumvorgänge erübrigen. Da schließlich die Anschlußleitungen für den Ladekreis und den Verbraucherkreis nicht durch die Wärmeisolierung, sondern durch den Boden des Behälters geführt werden, der keiner aufwendigen Wärmeisolierung bedarf, können die Vorteile der evakuierten Wärmeisolierung trotz der beschränkten Wärmebelastung auch für Wärmespeicher in einfacher Weise genützt werden.

Damit die Hülle der evakuierten Wärmeisolierung nicht nur auf der dem Behälter zugekehrten Innenseite der Wärmeisolierung, sondern auch auf der Außenseite vor einer mechanischen Beschädigung geschützt werden kann, empfiehlt es sich, eine Außenverkleidung des Behälters mit einer entsprechenden mechanischen Festigkeit vorzusehen und zwischen der Außenverkleidung und der Hülle der Wärmeisolierung ebenfalls eine Weichschaumschicht anzuordnen. Um eine Verlagerung der Weichschaumschicht auf der Außen- bzw. Innenseite der Wärmeisolierung zu vermeiden, kann die Weichschaumschicht vorteilhaft mit der Hülle verklebt werden.

Während eine Anpassung der evakuierten Wärmeisolierung an den kreiszylindrischen Mantel des Behälters vergleichsweise einfach durch eine polygonartige Umrißform der Wärmeisolierung sichergestellt werden kann, ist eine Anpassung an gewölbte Behälterdecken kaum möglich, wie sie bei Druckbehältern üblich sind. Aus diesem Grunde kann die Wärmeisolierung im Bereich der Behälterdecke in Form einer ebenen Scheibe ausgebildet werden, die einen der Umrißform der Wärmeisolierung des Behältermantels entsprechenden Umfang aufweist. Ist diese Scheibe mit einem umlaufenden Stufenfalz mit den einzelnen Schichten entsprechenden Falzstufen versehen, die mit entsprechenden Falzstufen des oberen Randes der Wärmeisolierung des Behältermantels zusammenwirken, so ergibt sich neben einer einfachen Verbindung des Isoliermantels mit der Isolierdecke eine nicht durch Zwischenschichten unterbrochene Wärmeisolierung, weil die einander entsprechenden Schichten im Decken- und Mantelbereich stumpf aneinander stoßen.

In der Zeichnung ist der Erfindungsgegenstand beispielsweise dargestellt. Es zeigen
- Fig. 1: einen erfindungsgemäßen Wärmespeicher in einer schematischen Seitenansicht mit geschnittener Wärmeisolierung und
- Fig. 2: die Wärmeisolierung im Querschnitt in einem größeren Maßstab.

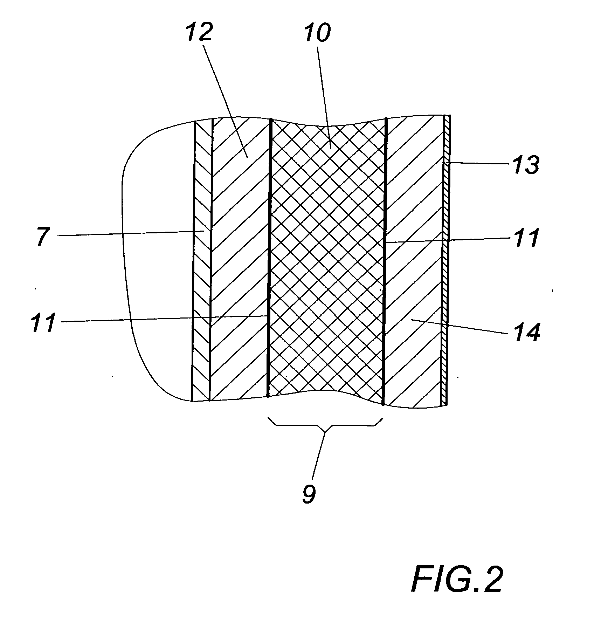

Der Behälter 1 des dargestellten Wärmespeichers ist über Anschlußleitungen 2, 3 an einen Verbraucherkreis und über Anschlußleitungen 4, 5 an einen Ladekreis angeschlossen. Diese Anschlußleitungen 2, 3 für den Vor- und den Rücklauf des Verbraucherkreises sowie die Anschlußleitungen 4, 5 für den Vor- und Rücklauf des Ladekreises sind durch den Boden 6 des Behälters 1 geführt. Der Mantel 7 und die wie der Boden 6 gewölbte Decke 8 des Behälters 1 sind mit einer Wärmeisolierung 9 umgeben. Wie insbesondere der Fig. 2 entnommen werden kann, weist die Wärmeisolierung 9 einen porösen Dämmstoffkern 10 auf, der in eine Hülle 11 gasdicht eingeschweißt ist. Die besondere Isolationswirkung wird durch eine Evakuierung des porösen Dämmstoffkernes 10 erreicht, der ein Zusammenfallen der Hülle 11 zufolge des in der Hülle aufgebauten Vakuums verhindert. Um die Hülle 11 der Wärmeisolierung 9 einerseits vor einer thermischen Überlastung und anderseits vor einer mechanischen Beschädigung zu schützen, ist zwischen dem Behältermantel 7 und der Hülle der den Behältermantel 7 umgebenden Wärmeisolierung 9 eine Weichschaumschicht 12 vorgesehen, die an der Hülle 11 angeklebt ist und somit von der Wärmeisolierung 9 getragen wird. Eine mechanische Beschädigung der Hülle 11 auf der Außenseite der Wärmeisolierung 9 wird durch eine Außenverkleidung 13 des Behälters 1 im Zusammenwirken mit einer weiteren Weichschaumschicht 14 verhindert, die wiederum mit der Hülle 11 durch eine Klebeschicht verbunden werden kann.

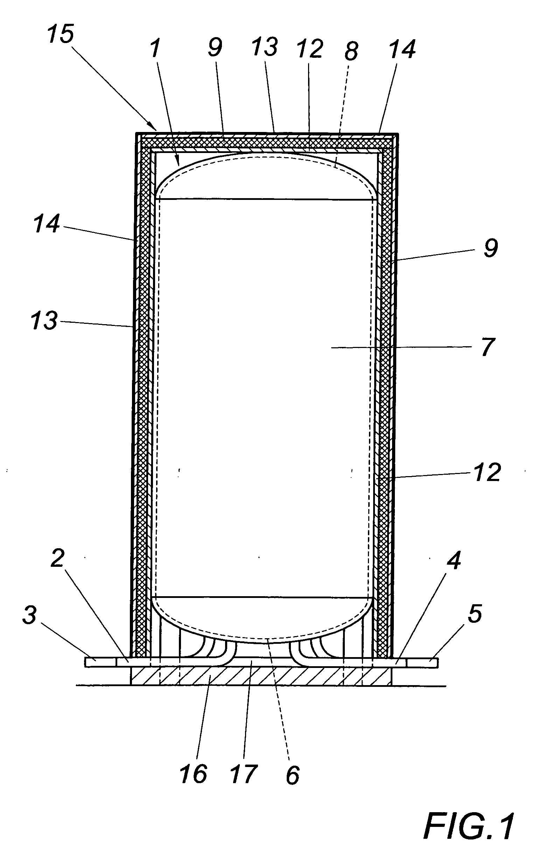

Wie der Fig. 1 zu entnehmen ist, ragt die Außenverkleidung 13 mit der Weichschaumsicht 14 im Bereich der den Mantel 7 des Behälters 1 umschließenden Wärmeisolierung 9 im oberen Randbereich über die Stirnseite der Wärmeisolierung 9 vor, während die Weichschaumschicht 12 auf der Innenseite der Wärmeisolierung 9 entsprechend der Dicke dieser Weichschaumschicht 12 gegenüber der Stirnseite der Wärmeisolierung 9 zurückversetzt ist, so daß sich ein Stufenfalz zur Aufnahme einer die Wärmeisolierung 9 im Bereich der Decke 8 des Behälters 1 bildenden Scheibe 15 ergibt. Da die Umfangsfläche dieser Scheibe 15 ebenfalls einen Stufenfalz mit den einzelnen Schichtdicken entsprechenden Falzstufen formt, stoßen die einander entsprechenden Schichten ohne störende Zwischenschichten stumpf aneinander an, was nicht nur eine einfache, formschlüssige Verbindung zwischen dem Mantel der Wärmeisolierung 9 und der Scheibe 15 sicherstellt, sondern auch eine nicht durch Zwischenschichten gestörte, durchgehende Wärmeisolierung 9 mit sich bringt.

Da der Behälter 1 im Bereich des Bodens 6 keiner aufwendigen Wärmedämmung bedarf, kann im Bodenbereich eine herkömmliche Schaumstoffisolierung 16 vorgesehen werden, auf die die Wärmeisolierung 9 des Behältermantels 7 aufgesetzt ist. Diese Schaumstoffisolierung 16 kann zu diesem Zweck mit einem umlaufenden Randsteg 17 versehen werden, der von den Anschlußleitungen 2, 3 bzw. 4, 5 durchsetzt wird.

## Patentansprüche

1. Wärmespeicher mit einem über Anschlußleitungen (2, 3; 4, 5) einerseits an einen Ladekreis und anderseits an einen Verbraucherkreis angeschlossenen Behälter (1) für einen Wärmeträger, wobei der Behälter (1) an der Außenseite seines Mantels (7) und seiner Decke (8) eine Wärmeisolierung (9) trägt, die einen porösen Dämmstoffkern (10) in einer gasdicht verschweißten, evakuierten Hülle (11) aus einer Kunststoffolie aufweist, **dadurch gekennzeichnet, daß** zwischen der Hülle (11) der Wärmeisolierung (9) und dem Mantel (7) des Behälters (1) eine Weichschaumschicht (12) vorgesehen ist und daß die Anschlußleitungen (2, 3; 4, 5) für den Ladekreis und den Verbraucherkreis durch den Boden (6) des Behälters (1) geführt sind.

2. Wärmespeicher nach Anspruch 1, **dadurch gekennzeichnet, daß** zwischen der Hülle (11) und einer Außenverkleidung (13) des Behälters (1) ebenfalls eine Weichschaumschicht (14) vorgesehen ist.

3. Wärmespeicher nach Anspruch 1 oder 2, **dadurch gekennzeichnet, daß** die Weichschaumschicht (12, 14) mit der Hülle (11) verklebt ist.

4. Wärmespeicher nach einem der Ansprüche 1 bis 3, **dadurch gekennzeichnet, daß** die Wärmeisolierung (9) im Bereich der Behälterdecke (8) in Form einer ebenen Scheibe (15) ausgebildet ist.
